# EUROPEAN PATENT APPLICATION

(11) **EP 3 689 149 A1**
(43) Date of publication of application: **05.08.2020**
(21) Application number: 18792562.3
(22) Date of filing: 13.09.2018
(51) Int. Cl.: A23F 5/02, A23F 5/14, A23F 5/46

(54) **METHOD FOR PRODUCING AN EDIBLE SUBSTANCE BASED ON COFFEE AND WINE, USE AND SYSTEM INVOLVING RESPECTIVE EDIBLE PRODUCTS**

(30) Priority: 14.09.2017 PT 2017110288
(71) Applicant: Novadelta-Comércio e Industria de Cafés, S.A., 1950-041 Lisboa (PT)
(72) Inventor: NABEIRO, Rui Miguel, 7370-112 Campo Maior (PT)
(74) Representative: Ferreira Pinto, Francisca
(86) International application number: PCT/PT2018/050034
(87) International publication number: WO 2019/054890

(57) **Abstract**

The present invention discloses a method for producing an edible substance based upon coffee and wine. In particular, the present invention discloses a method that includes providing, inside of a recipient (1), a quantity of coffee substance (2; 21, 22) to a quantity of wine substance (3; 31, 32) under a pressure different from the atmospheric pressure, preferentially superior to the atmospheric pressure, along at least most part of a stage period, so as to provide a more effective integration of organoleptic properties characteristic of wine into said coffee substance (2; 21, 22).

## Description

### Field of the invention

The present invention refers to the field of edible substances including coffee and wine, in general, and edible substance presenting coffee and wine related characteristics, in particular.

### Background of the invention

Coffee constitutes an edible product that presents a significant number and diversity of organoleptic properties resulting from a particularly matrix of multiple chemical substances, present to a bigger or smaller degree according to different, such as for example "blend", type of post-harvest processing, including pre-roasting and post-roasting processing, roasting degree and profile, and other. Moreover, coffee is an edible product in different forms, including roasted and ground coffee, available in the form of loose granulate and of compact pod and used for example in the preparation of espresso type coffee, soluble coffee in the form of soluble granulate or soluble powder (obtained by means of "spray dry"), coffee concentrate in the liquid form, and others.

In similar manner, wine is also an edible product that presents interesting organoleptic properties for certain consumers.

The prior art presents several examples of combinations of coffee and wine. In particular, there are known processes of type maceration whereby green coffee beans are exposed during a stage period to wine inside of a recipient.

It is for example known the possibility of maceration of green coffee beans in wine, before roasting and grounding thereof, as described for example in:
https://iecafeblog.wordpress.com/2017/03/28/una-original-forma-de-beber-cafe-cafe-infusionado-en-vino/

According to a similar approach, the coffee beans are macerated in wine barrels that have previously washed with a particular wine, as described in:
https://www.perfectdailygrind.com/2016/06/try-coffee-aged-wine-barrel/,
or in whisky ageing barrels, as described in:
https://whiskeybarrelcoffee.com/collections/whiskey-barrel-blends.

It is further known the possibility of adding sugar to coffee to be roasted thereafter, so as to enhance the flavor characteristics obtained, as describe in: https://www.uncommongoods.com/product/merlot-infused-coffee.

Document US 2014/0079854 A1 discloses a process of infusion of liquid and a method of brewing a beverage. The document basically discloses a method whereby a given quantity of infusion material and a given quantity of liquid are placed in a chamber at atmospheric pressure and there is applied at least one cycle of reduced pressure so as to generate an at least partial vacuum.

Document EP 2353402 A1 discloses a method for changing the flavor of a food product. In particular, the method includes extraction to a food product of at least one substance derivate from a solid compound, of a liquid, or of a gas, whereby the food product is exposed to high pressure during a previously defined period time together with said solid compound, liquid, or gas.

None of the documents in the prior art discloses a solution that provides a more effective appropriation of organoleptic properties characteristic of wine by coffee beans, and, consequently, by different types of coffee edible substances produced based upon said coffee beans.

### General description of the invention

The objective of the present invention is to provide a more efficient method of production of edible substances combining the properties of coffee and wine, in particular with better incorporation in coffee beans of certain organoleptic proprieties characteristic of wine, including of green coffee beans, at least partially roasted coffee beans, and roasted and ground coffee beans.

This objective is attained according to the present invention by means of a method according to claim 1, whereby preferred embodiments are disclosed in depending claims.

An inherent objective is to provide the use of an edible substance produced by means of a method according to the present invention.

Another objective of the present invention is to provide a system of edible substances, in particular coffee beans or a substance derivate therefrom, presenting organoleptic characteristic of wine.

This objective is attained according to the present invention by means of a system according to claim 15.

### Description of the figures

The invention shall hereinafter be explained in greater detail based upon preferred embodiments and in the attached Figures.

The Figures show, in simplified schematic representations:
- Figure 1:: flux diagram of a first preferred embodiment of the method according to the present invention;
- Figure 2:: schematic diagram of pressure evolution inside of the recipient (1), in the case of said first embodiment of method according to the present invention;
- Figure 3:: flux diagram of a second preferred embodiment of the method according to the present invention;
- Figure 4:: schematic diagram of pressure evolution inside of the recipient (1), in the case of said second embodiment of method according to the present invention;
- Figure 5:: flux diagram of a third preferred embodiment of the method according to the present invention;
- Figure 6:: schematic diagram of pressure evolution inside of the recipient (1), in the case of said third embodiment of method according to the present invention;
- Figure 7:: flux diagram of a fourth preferred embodiment of the method according to the present invention;
- Figure 8:: schematic representation of system of edible substances based upon the method according to the present invention.

### Detailed description of preferred embodiments of the invention

The present invention discloses a method that can carried out with different types of coffee substances (2), including for example green coffee beans (21), at least partially roasted coffee beans (22), or of light roast, and other coffee substances associated with coffee preparation, and with different types of wine substances (3), including for example wine (31), wine mash (32) and other wine substances associated with the preparation of wine.

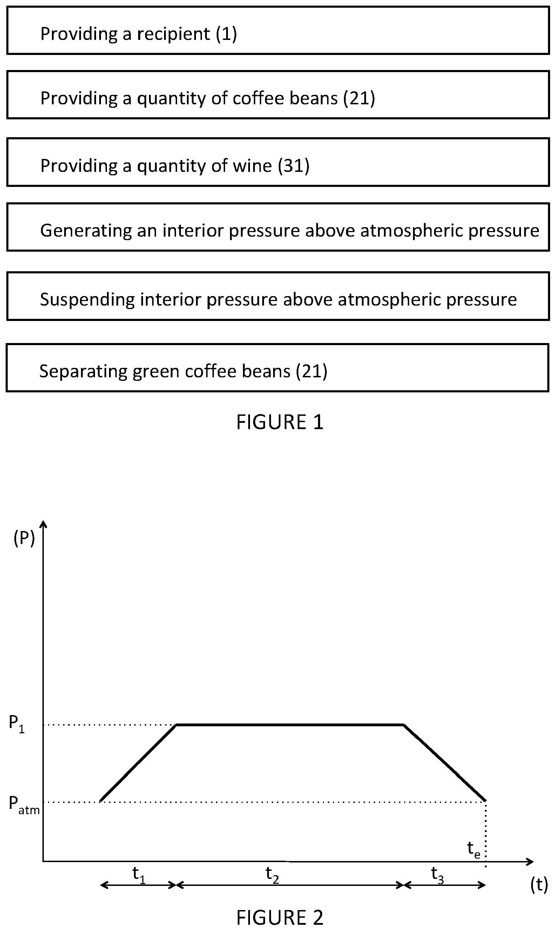

According to a first embodiment of the method according to the present invention (see Figures 1 and 2), a first quantity of green coffee beans (21) and a first quantity of wine (31) is provided to the interior of a recipient (1), whereby there is thereafter provided an interior pressure in said recipient (1) that is bigger than the atmospheric pressure, preferentially bigger than 2 bar, particularly preferentially bigger than 5 bar.

The application of a pressure inside of the recipient (1) advantageously provides for better results in terms of association of organoleptic characteristics of wine to coffee.

In the case of this embodiment, and as represented in Figure 2, the pressure inside of the recipient (1) increases after closing thereof until reaching a level, for example of 5 bar, that is kept substantially constant along at least most part of the stage period.

In particular, it is preferred when in a first period of time (t₁) takes place the diffusion/ transport of an edible substance associated with wine to the coffee beans, in a second time period (t₂) there takes place maceration under pressure, and in a third time period (t₃) takes place the reduction of pressure value again to atmospheric pressure. To this process follows the separation of the exceeding wine and preparation of coffee beans for drying.

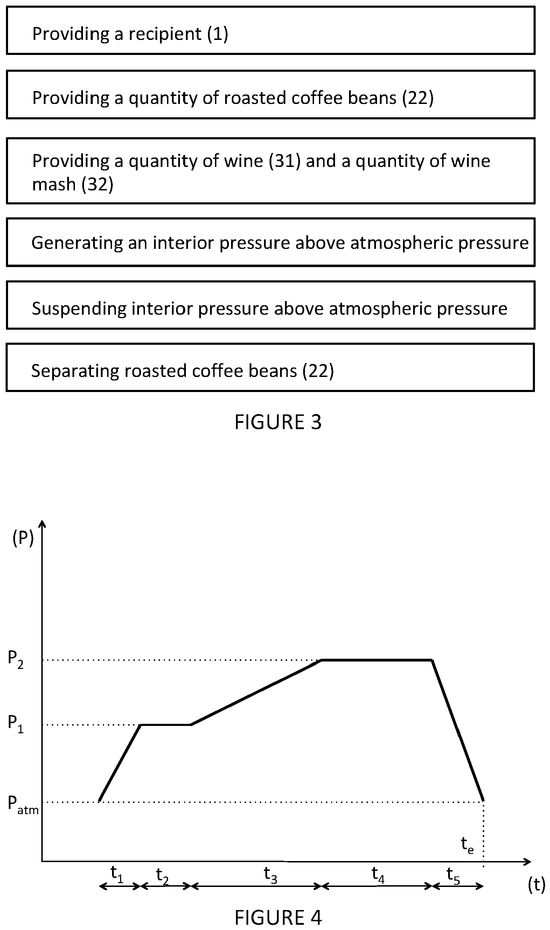

In the case of a second embodiment, represented in Figures 3 and 4, there is provided a first quantity of roasted coffee beans (22), in particular partially roasted, preferentially a light roast, to the interior of said recipient (1). Thereafter there is provided a first quantity of wine (31) and further a first quantity of wine mash (32). The sequence can also be reserve, that is, first the wine mash (32), then the wine (31) and then the coffee beans (21), or another variant thereof.

As represented in Figure 4, the stage pressure inside of the recipient (1) initially increases in this case until reaching a first stage pressure value, P₁, for example 2 bar, which is kept during a given period of time, after which increases to a second stage pressure value, P₂, for example 5 bar.

In particular, during a first period (t₁) there can take place diffusion/ transport of edible substance associated with wine to the coffee beans, on a second period (t₂) there can take place a first phase of maceration under a first pressure value, in a third period (t₃) there can take place a variation of the maceration pressure, with the same quantity of wine or varying the quantity of wine, in a fourth period (t₄) there can take place a second phase of maceration under a second pressure value, and in a fifth phase (t₅) there takes place the reduction of the pressure value again to the atmospheric pressure. To this process there follows the separation of the excess wine and the preparation of the coffee beans for drying.

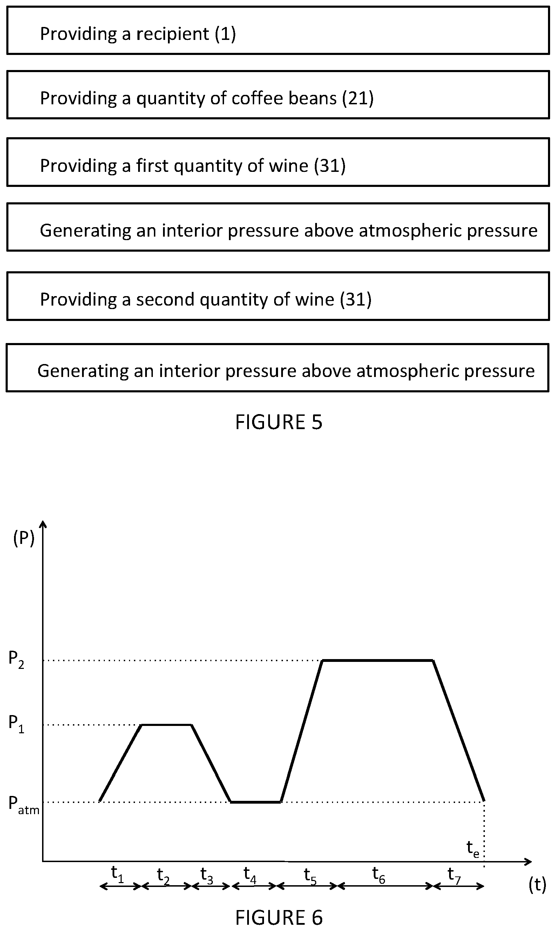

In the case of a third preferred embodiment (Figure 5), there is provided a first quantity of wine (31) and, after the latter has been submitted to an interior pressure above of the atmospheric pressure, further a second quantity of wine (31). Said first and second quantities of wine (31) can differ in at least one of: type and quantity of wine, and pressure inside of the recipient.

In terms of the evolution of stage pressure inside of the recipient (1), there is applied a first stage pressure value, P₁, during a given period of time, after which there is a return to the pressure value similar to the ambient pressure during a given second period of time, and a second stage pressure value is afterwards applied, P₂, during a given period of time, as represented in Figure 6.

In particular, in a first period (t₁) there takes place diffusion/ transport of the edible substance of wine to the coffee beans together with a pressure increase, in a second period (t₂) there takes place a first phase of maceration under a first pressure value, in a third period (t₃) there takes place a pressure variation, for example reduction thereof, in a fourth period (t₄) there takes place maceration at atmospheric pressure, in a fifth period again there takes place diffusion/ transport of edible substance of wine to the coffee beans together with a pressure increase, this time to a second pressure value, in a sixth period (t₆) there takes place a second phase of maceration under a second constant pressure value, and in a seventh period (t₇) there takes place a reduction of the pressure value again to the atmospheric pressure. To this process there follows the separation of the wine excess and preparation of coffee beans for drying.

Other evolutions of stage pressure, including pressure values and respective time periods, can be likewise considered. There can be considered stage evolutions at constant temperature, including at ambient temperature.

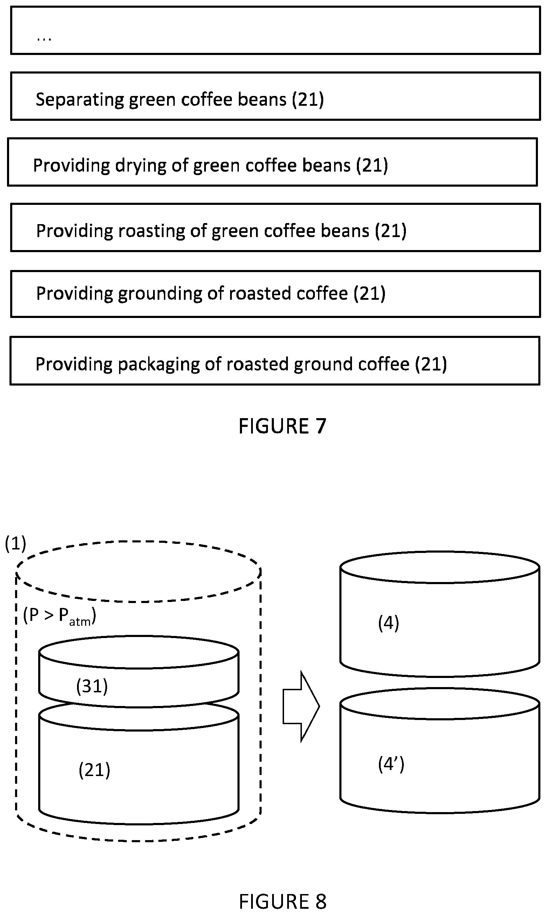

According to another preferred embodiment represented in Figure 7, after the stage period inside of the recipient (1), said coffee substance (2; 21, 22) is separated from the wine substance (3; 31, 32), and there is advantageously provided a drying of said coffee substance (2; 21, 22), for example green coffee beans (21).

The method according to the present invention can provide a system of edible products including at least one edible substance of coffee (4), preferentially a plurality of edible substances of coffee (4, 4') resulting from the processing of green coffee beans, whereby said edible substances (4, 4') are provided as edible substances that are beverage precursors when mixed with a fluid flow, such as for example coffee of the espresso type, soluble coffee and similar, or as edible substances to be combined with other edible substances, such as for example as additives of organoleptic properties of coffee and wine.

In particular, it is preferred when said system of edible products comprises a plurality of edible substances (4, 4') that present at least one of: at least one of different type and different quantity of at least one of coffee substance (2; 21, 22) and of wine (3; 31, 32), at least one different value of processing parameter including from the list of parameters that includes stage pressure, stage pressure profile, including time of duration, evolution of pressure along the time of duration, cycles of stage under pressure, cycles of applying pressure, applying mechanic energy, drying period, roasting parameters of coffee beans, grinding parameters of coffee beans.

## Claims

1. **Method** for preparing a coffee-based edible substance that includes the following steps:
- providing a recipient (1) adapted so that can retain a pressure different from the atmospheric pressure inside thereof;
- supplying a first quantity of coffee substance (2; 21, 22) to said recipient (1);
- supplying a first quantity of at least one wine substance (3; 31, 32) to said recipient (1);
- whereby the mass relation of said first quantity of coffee substance (2; 21, 22) and first quantity of wine substance (3; 31, 32) is of at least 4:1, preferentially at least 2:1, and at most 1:4, preferentially at most 1:2;
- closing said recipient (1);
- providing a first stage pressure value inside of said recipient (1), provided as an at least approximately constant value, or as a variation inferior to 10%, along at least part of the duration of stage period, whereby said first stage pressure value is different from, in particular is bigger than, the value of the atmospheric pressure;
- at least one pressure cycle including said first stage pressure value;
- whereby at least one, preferentially at least two of: said first stage pressure value, the number and magnitude of stage pressure values, the variation of the pressure value along the stage period, and the duration of the stage period, is defined according to the type and quantity of coffee substance (2; 21, 22);
- removing the coffee substance (2; 21, 22) from said recipient, separating the latter from the remaining content, after at least one stage period.

2. Method according to claim 1, **characterized**
**in that** said coffee substance (2; 21, 22) is at least one of:
- green coffee beans (21);
- roasted coffee beans (22);
- other substance associated with coffee and resulting from processing of coffee beans, and
**in that** said wine substance (3; 31, 32) is at least one of:
- wine (31);
- wine mash (32);
other substance associated with wine and resulting from processing grapes into wine,
whereby said supplies of said coffee (2; 21, 22) and wine substances (3; 31, 32) include at least one quantity and one type of coffee (2; 21, 22) and wine substances (3; 31, 32), preferentially at least one of: different quantities and different types of coffee substances (2; 21, 22), such as for example green coffee beans from different origins, roasted coffee beans with different roasting, and of wine substances (3; 31, 32, 33), such as for example from different wines, or different types of wine mash.

3. Method according to claims 1 or 2, **characterized in that** said stage pressure is provided according to at least one of:
- does not include a pressure value smaller than the atmospheric pressure value,
- includes a pressure value bigger than the atmospheric pressure value,
- the pressure value varies, for example gradually and along different pressure levels, including in successive cycles of bigger and smaller pressure value,
along at least part, preferentially at least most part of said stage period.

4. Method according to any one of claims 1 to 3, **characterized in that** the value of said stage pressure is bigger than 1,1 bar, preferentially bigger than 1,9 bar, particularly preferentially bigger than 4,9 bar, at least in the case of green coffee beans (21), preferentially also in the case of roasted coffee beans (22), and smaller than 50 bar, preferentially smaller than 30 bar, particularly preferentially smaller than 20 bar, along at least part, preferentially at least most part of said stage period.

5. Method according to any one of claims 1 to 4, **characterized in that** during said stage period, a second quantity to said wine substance (3; 31, 32) to said recipient (1), preferentially being preceded by the removal of said first quantity of wine substance (3; 31, 32).

6. Method according to any one of claims 1 to 5, **characterized In that** said stage period is longer than 6 hours, preferentially longer than 12 hours, particularly preferentially longer than 24 hours, and shorter than 48 hours, and
**in that** at least part, preferentially at least most part of said stage period is carried out at a temperature bigger than 16°C, preferentially bigger than 20°C, particularly preferentially bigger than 24°C, and smaller than 40°C.

7. Method according to any one of claims 1 to 6, **characterized in that** the proportion in mass of said coffee substance (2; 21, 22) in relation to said wine substance (3; 31, 32) is of at least 0,25:1, preferentially at least 0,5:1.

8. Method according to any one of claims 1 to 7, **characterized in that** said recipient (1) is adapted so that there is provided mechanic agitation to said coffee (2; 21, 22) and wine substances (3; 31, 32).

9. Method according to any one of claims 1 to 8, **characterized in that** said first quantity of wine substance (3; 31, 32) is used in said recipient (1) with a plurality of successive batches of coffee substances (2; 21, 22).

10. Method according to any one of claims 1 to 9, **characterized in that** after said separation of coffee substance (2; 21, 22), said coffee substance (2; 21, 22) is submitted to drying by means of exposure to a temperature bigger than ambient temperature and inferior to 120°C, preferentially inferior to 100°C.

11. Method according to any one of claims 1 to 10, **characterized in that** further comprises the steps of:
- roasting of coffee beans, after a respective stage period under pressure with a wine substance (3; 31, 32);
- grounding of coffee beans;
- degasification of at least one of coffee beans and ground coffee beans;
- packaging in packages for multi-dose portions and/ or for single portions, whereby said packages are provided with oxygen barrier,
whereby said steps are preferentially carried out successively in the aforementioned sequence.

12. Method according to any one of previous claims, **characterized in that** the process of roasting of green coffee beans after exposure to wine, is carried out at a temperature inferior to 250°C, preferentially at a temperature inferior to 230°C.

13. Method according to any one of previous claims, **characterized in that** after said grounding of coffee beans there is a storage of ground roasted coffee during a period of at least 1 day and at most 15 days, preferentially at most 12 days, before a posterior processing of said ground roasted coffee.

14. **Use** of an edible coffee substance (4) produced by means of a method that comprises storing a quantity of coffee substance (2; 21, 22) and a quantity of wine substance (3, 31, 32) under a pressure bigger than the atmospheric pressure during at least part of a stage period inside of a recipient (1), in particular by means of a method according to any one of previous claims 1 to 13.

15. **System of edible products** including at least one edible coffee substance (4), preferentially a plurality of edible coffee substances (4, 4') resulting from the processing of green coffee beans, whereby said processing includes a method according to any one of claims 1 to 13, and whereby said edible substances (4, 4') are provided as edible substances precursor of beverages when mixed with a fluid flow, such as for example espresso type coffee, soluble type coffee and similar, or as edible substances to combine with other edible substances, such as for example as additives of organoleptic properties of coffee and wine.

16. System according to claim 15, **characterized**
**in that** said edible substances (4, 4') present at least one of:
- at least one of: different type and different quantity of at least one of coffee substance (2; 21, 22) and wine substance (3; 31, 32);
- at least one different value of parameter of processing including from the list of parameters that includes stage pressure, stage pressure profile, application of mechanic energy, drying period, parameters of roasting of coffee beans, parameters of grounding of coffee beans.
